# EUROPEAN PATENT SPECIFICATION

(11) **EP 2 696 083 B1**
(45) Date of publication and mention of the grant of the patent: **01.03.2017**
(21) Application number: 13187861.3
(22) Date of filing: 11.11.2008
(51) Int. Cl.: F16B 21/07, F16B 5/07

(54) **Multi-angle pop-in mechanical fastener**
Verschiedene Winkelflächen aufweisendes mechanisches Rastelement
Fixation encliquetable ayant plusieurs surfaces à angle differentes

(30) Priority: 15.11.2007 US 940514
(43) Date of publication of application: 12.02.2014
(62) Divisional of application: 08849714.4
(73) Proprietor: 3M Innovative Properties Company, St. Paul, MN 55133-3427 (US)
(72) Inventor: Kobe, James J., Saint Paul, MN 55133-3427 (US); Turch, Steven E., Saint Paul, MN 55133-3427 (US); Black, Philip D., Hudson, Wisconsin 54016 (US)
(74) Representative: Vossius & Partner Patentanwälte Rechtsanwälte mbB

(56) References cited:
- EP-A1- 0 681 107
- EP-A1- 0 764 788
- DE-A1- 2 153 062
- DE-A1- 2 226 315
- DE-A1- 10 245 276
- FR-A1- 2 675 545
- GB-A- 2 026 083
- US-A- 3 871 430
- US-A1- 2002 197 107
- US-A1- 2005 217 087
- US-A1- 2007 023 586

## Description

### FIELD

The present disclosure relates to pop-in mechanical fasteners. The mechanical fasteners include a locking surface having at least two angled stops.

### SUMMARY

The invention is a pop-in mechanical fastener in accordance with claim 1. Preferred embodiments are defined in the dependent claims. The document DE 2 226 315 A shows the features of the preamble of claim 1.

The details of one or more embodiments of the invention are also set forth in the description below. Other features, objects, and advantages of the invention will be apparent from the description and from the claims.

### BRIEF DESCRIPTION OF THE DRAWINGS

FIG. 1 illustrates a mating mechanical fastener.
FIG. 2a illustrates an exemplary pop-in mechanical fastener according to some embodiments of the present disclosure.
FIG. 2b illustrates the insertion of the exemplary pop-in mechanical fastener of FIG. 2a into a part.
FIG. 2c illustrates the deflection of the tabs of exemplary pop-in mechanical fastener of FIG. 2a as it is further inserted into a part.
FIG. 2d illustrates the exemplary pop-in mechanical fastener of FIG. 2a after complete insertion into a part.
FIG. 3a illustrates a prior art locking tab.
FIG. 3b illustrates the locking surface of the prior art locking tab of FIG. 3a.
FIG. 4a illustrates the interaction of a thick part with the locking surface of the prior art locking tab of FIG. 3b.
FIG. 4b illustrates the interaction of an intermediate thickness part with the locking surface of the prior art locking tab of FIG. 3b.
FIG. 4c illustrates the interaction of a thin part with the locking surface of the prior art locking tab of FIG. 3b.
FIG. 5 illustrates an exemplary dual-angle locking tab according to some embodiments of the present disclosure.
FIG. 6a illustrates the interaction of an intermediate to thick part with the locking surface of the exemplary locking tab of FIG. 5.
FIG. 6b illustrates the interaction of an intermediate to thin part with the locking surface of the exemplary locking tab of FIG. 5.
FIG. 7 illustrates an exemplary multi-angle locking tab according to some embodiments of the present disclosure.
FIG. 8 illustrates another exemplary multi-angle locking tab according to some embodiments of the present disclosure.

### DETAILED DESCRIPTION

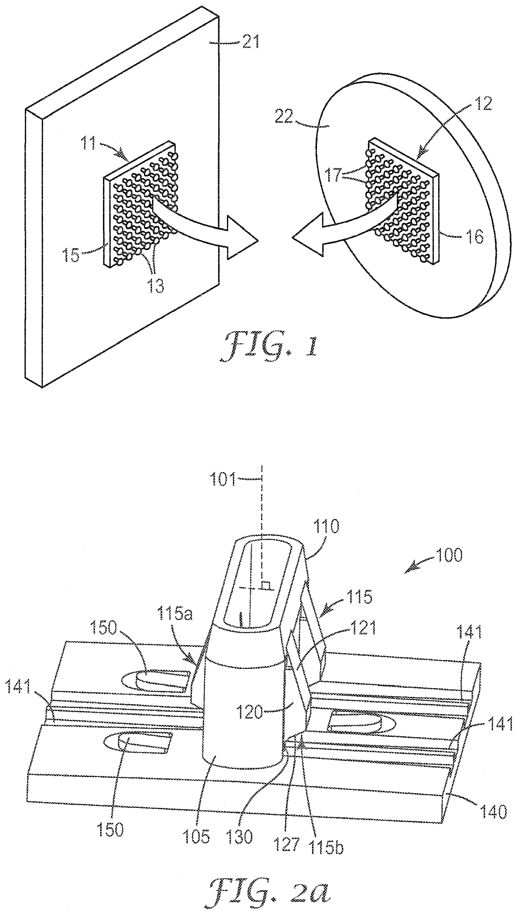

Generally, mating mechanical fasteners such as hook and loop products and 3M™ DUAL LOCK ™ reclosable fasteners provide an alternative to conventional attachment means such as adhesives and welding. An exemplary mating mechanical fastener is illustrated in **FIG. 1****.** First half **11** of the mating mechanical fastener includes first base **15,** which is adhered to first part **21,** and first stems **13** (e.g., mushroom headed stems). Second half **12** of the mating fastener includes second base **16** which is adhered to second part **22,** and second stems **17.** Generally, the stem designs (e.g., head and stem shapes, spatial distributions, and orientations) of first stems **13** and second stems **17** are selected to achieve the desired interlocking and removal forces when first stems **13** are mated with second stems **17** to mechanically couple first part **21** to second part **22.**

Such mating mechanical fasteners provide an effective means for releasably and repositionably mechanically coupling one part to another. Generally, the two mating halves of such mating mechanical fasteners are attached to their respective parts prior to connecting the halves to complete the mechanical attachment of one part to another. Often adhesives are used to attach each half of a mating mechanical fastener to its respective part such that they remain affixed to their parts as one part is releasably and repositionably connected top another part via the mating mechanical fastener.

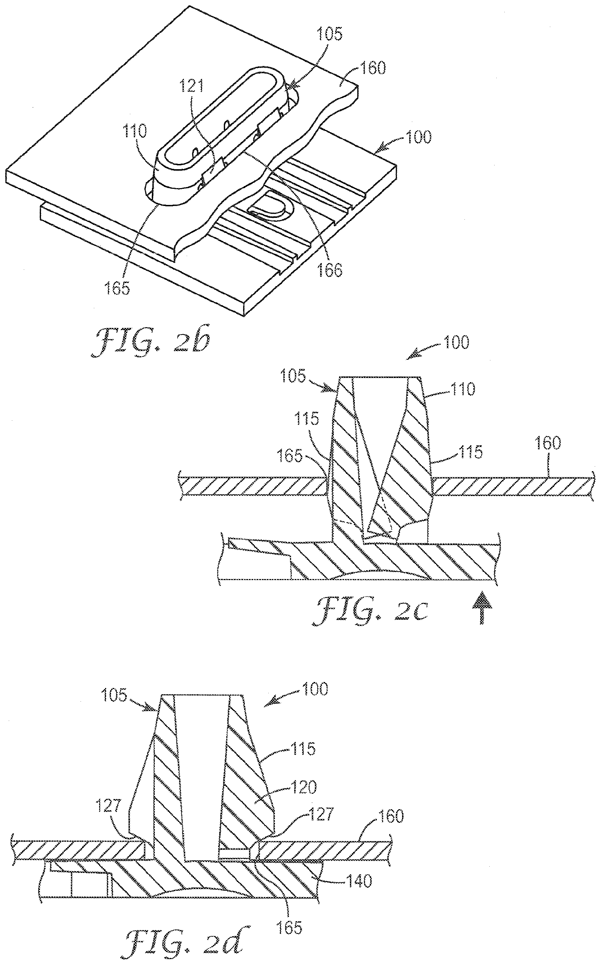

As an alternative to adhering a portion of a mating mechanical fastener directly to a part using adhesives and the like, pop-in mechanical fasteners have been used to provide an anchoring point to which mating mechanical fasteners can be attached, e.g., adhered. An exemplary pop-in mechanical fastener according to some embodiments of the present disclosure is shown in **FIGS. 2a-2d****.**

Referring to **FIG. 2a****,** exemplary pop-in mechanical fastener **100** comprises base **140** and pin **105** connected to the base. Pin **105** includes insertion rim **110,** and at least one locking tab **115** extending outward relative to insertion axis **101,** which is generally perpendicular to base **140,** although other orientations are possible. Locking tab **115** is pivotally connected to insertion rim **110,** and includes wing **120** and terminal stem **130.** Wing **120** includes insertion surface **121** and locking surface **127.**

In some embodiments, the pop-in mechanical fastener includes at least two locking tabs, and in some embodiments, at least three locking tabs. In some embodiments, at least one locking tab, e.g., locking tab **115a,** is positioned on the side of pin **105** opposite at least one other locking tab, e.g., locking tab **115b.**

Referring to **FIG**. **2b**, pop-in mechanical fastener **100** can be connected to part **160** by inserting pin **105** into locking hole **165.** After insertion rim **110** has passed through locking hole **165,** perimeter **166** of locking hole **165** encounters insertion surface **121.**

Referring to **FIG. 2c**, an insertion force is applied to continue inserting pin **105** into locking hole **165.** Generally, the insertion force depends on the force required to pivot the one or more locking tab(s) **115** about insertion rim **110,** as the tabs(s) are pressed into the open center of pin **105,** thereby allowing pin **105** to pass through locking hole **165.**

Referring to **FIG. 2d****,** pop-in mechanical fastener **100** is fully inserted when base **140** contacts part **160.** Generally, the design of pop-in mechanical fastener **100** is selected relative to the dimensions of locking hole **165** and part **160** such that locking tab **115** springs back out of the center of pin **105.** In some embodiments, the perimeter of locking hole **165** will contact locking surface **127** of wing **120,** firmly holding pop-in mechanical fastener **100** to part **160.**

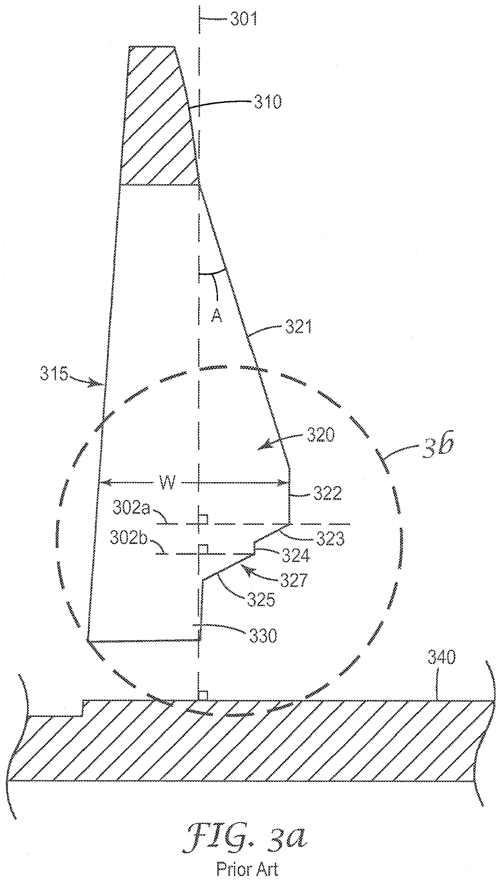

A cross-section of locking tab **315** of the prior art is shown in **FIG. 3a****.** Locking tab **315** includes wing **320** extending from insertion rim **310** to terminal stem **330,** which is adjacent base **340** of a pop-in mechanical fastener. Wing **320** includes insertion surface **321,** shoulder **322,** and locking surface **327.** Locking surface **327** consists of first angled stop **323,** second angled stop **325,** and step **324** connecting them.

Insertion surface **321** forms an angle, **A,** relative to insertion axis **301,** which is perpendicular to base **340.** The greater the angle **A,** the greater the insertion force required when pressing the pop-in mechanical fastener into place. Also, the greater the angle **A,** the greater the maximum width, **W,** of locking tab **315.**

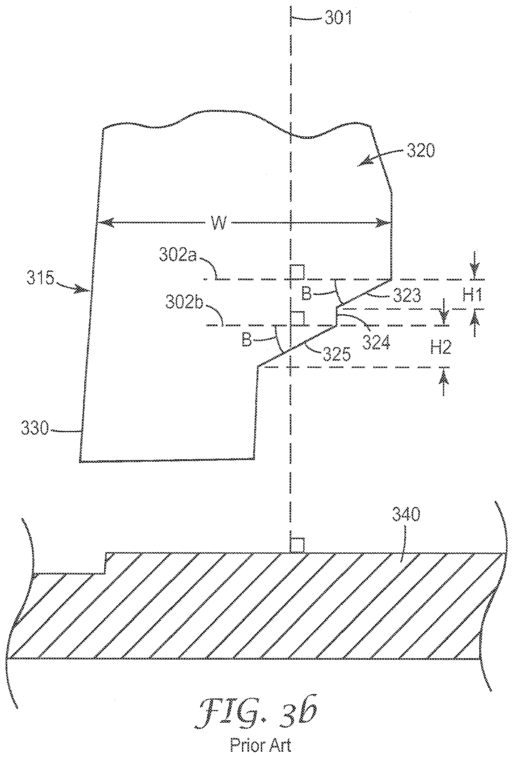

Referring to **FIG. 3b****,** both first angled stop **323** and second angled stop **325** form the same angle, **B,** relative to wing axes **302a** and **302b,** which are perpendicular to insertion axis **301.** The shallower the angle **B,** the greater the extraction force required when removing the pop-in mechanical fastener. However, as angle **B** decreases, the greater the width, **W,** of wing **320** required to provide the same range of height, **H1**, for first angled stop **323** and height, **H2,** for second angled stop **325.** Furthermore, as the width of wing **320** increases, the greater the required angle **A** for a fixed height fastener, leading to an undesirable increase in insertion force, as described above.

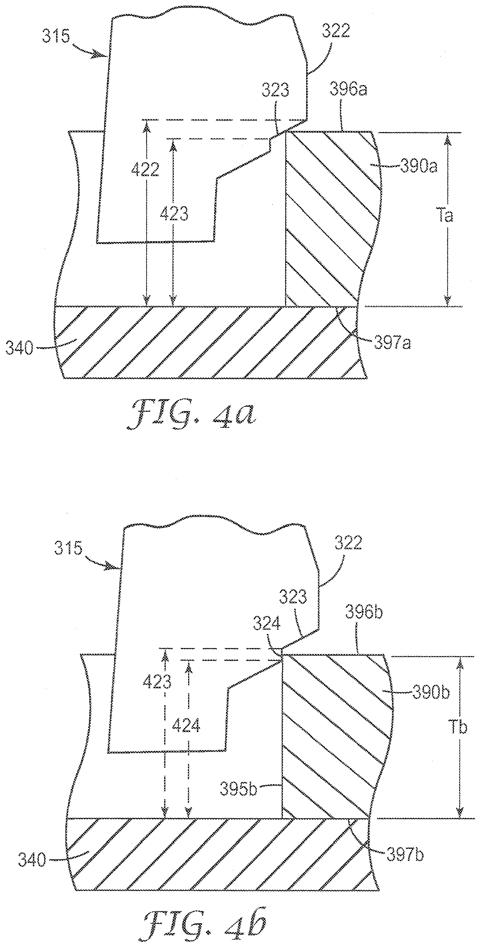

Referring to **FIG. 4a****,** part **390a** has a thickness, **Ta,** falling between distance **422** and distance **423.** When second surface **397a** contacts base **340** (i.e., the pop-in mechanical fastener is fully inserted) first surface **396a** has passed beyond shoulder **322** and locking tab **315** springs into place until first surface **396a** engages first angled stop **323,** holding part **390a** in place.

Referring to **FIG. 4b****,** part **390b** has a thickness, **Tb,** falling between distance **423** and distance **424.** When second surface **397b** contacts base **340,** first surface **396b** has passed beyond shoulder **322** and locking tab **315** springs into place. Because thickness **Tb** of part **390b** is less than distance **423,** first surface **396b** does not engage first angled stop **323;** rather, locking tab **315** springs outward until step **324** encounters the perimeter of locking hole **365b.** Part **390b** is held in place near base **340,** but some undesirable movement of perpendicular base **340** can occur equal to the difference between thickness **Tb** of part **390b** and distance **423.**

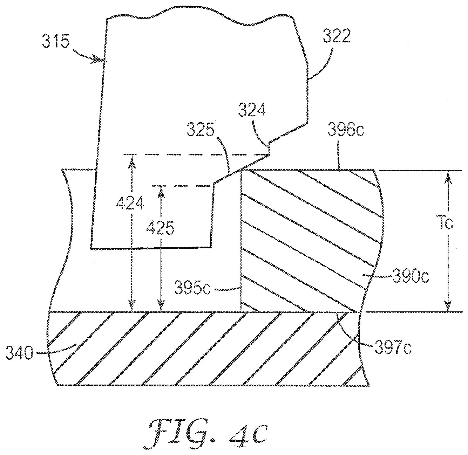

Referring to **FIG. 4c****,** part **390c** has a thickness, **Tc,** falling between distances **424** and **425.** As the pop-in mechanical fastener is pressed into locking hole **395c,** first surface **396c** passes beyond shoulder **322** and locking tab **315** begins springing into place. First, the motion of the tab is stopped when step **324** encounters the perimeter of locking hole **395c.** Upon the application of additional insertion force, the second surface **397c** contacts base **340,** and first surface **396c** passes beyond step **324** allowing locking tab **315** to finish springing into place until top first surface **396c** engages second angled stop **325,** holding part **390c** in place.

The present inventors have identified a variety of deficiencies with a pop-in mechanical fastener employing a locking tab of the prior art. For example, for certain part thicknesses, significant and undesirable motion perpendicular to the base can occur. In addition, the presence of a step between the two angled stops can result in improper insertion as the tab can stick or hang-up on the step rather than passing on to the second angled stop. This can lead to a loose fit, low extraction forces, and even failure. Finally, the use of two angled stops each having the same angle can limit the range of suitable part thicknesses while maintaining an acceptable level of insertion force.

A cross-section of locking tab **515** according to some embodiments of the present disclosure is shown in **FIG**. **5****.** Locking tab **515** includes wing **520** extending from insertion rim **510** to terminal stem **530,** which is adjacent base **540** of a pop-in mechanical fastener. Wing **520** includes insertion surface **521,** shoulder **522,** and locking surface **527.** Locking surface **527** consists of first angled stop **523** and second angled stop **525.**

Insertion surface **521** formes an angle, **C,** relative to insertion axis **501.** The greater the angle **C,** the greater the insertion force required when pressing the pop-in mechanical fastener into place.

First angled stop **523** forms an angle, **D,** relative to wing axis **502a,** which is perpendicular to insertion axis **501.** Similarly, second angled stop **525** forms an angle, **E,** relative to wing axis **502b.** The shallower the angles **D** and **E,** the greater the extraction force required when removing the pop-in mechanical fastener. However, as angle **D** decreases, the greater the width, **W,** of wing **520** required to provide the same range of height, **H1**, for first angled stop **523.** Similarly, although a shallower angle **E** may be desired to increase the extraction force, as angle **E** decreases, the greater the width, **W,** of wing **520** required to provide the same range of height, **H2,** for second angled stop **525.** Furthermore, as the width of wing **520** increases, the greater the required angle **C** for a fixed height fastener, leading to an undesirable increase in insertion force, as described above.

In some embodiments, angle **E** is greater than angle **D,** providing a steeper slope for second angled stop **525.** The present inventors have discovered that for the thinner parts that will engage the second angled stop, a steeper angle still provides an adequately high removal force. In some embodiments, a shallower angle **D** may be required to maintain an acceptable removal force for the thicker parts that would be held in place by first angled stop **523.** Thus, by combining a steeper angled second step and a shallower angled first step, a greater range of part thickness may be accommodated without requiring an undesirable increase in width, **W,** of wing **520,** and the corresponding undesirable increase in insertion force resulting from an increase in angle **C.**

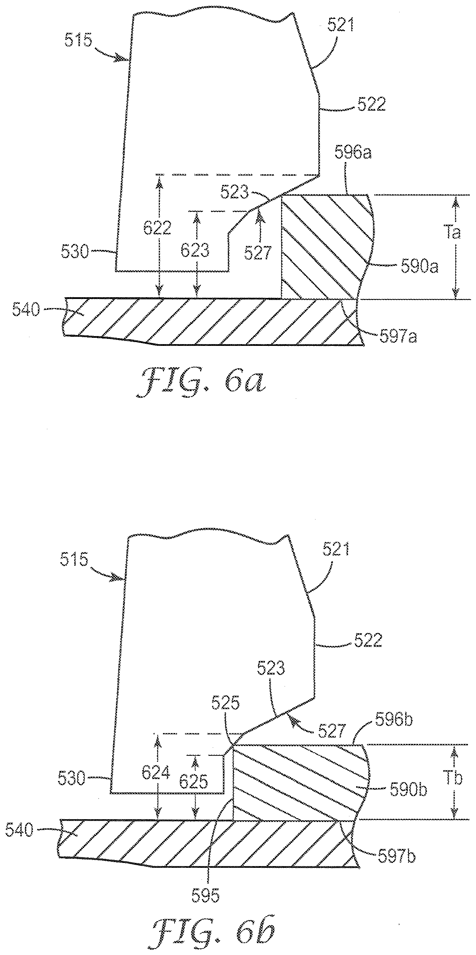

Referring to **FIG. 6a****,** part **590a** has a thickness, **Ta,** falling between maximum stop height **622** (which in this embodiment corresponds to the point of intersection between the first angled stop and the shoulder) and first intermediate stop height **623,** which corresponds to the minimum distance between base **540** and first angled stop **523.** When second surface **597a** contacts base **540** (i.e., the pop-in mechanical fastener is fully inserted) first surface **596a** has passed beyond shoulder **522** and locking tab **515** springs into place until top first surface **596a** engages first angled stop **523,** holding part **590a** firmly in place. Thus, for parts having a thickness between first intermediate stop height **623** and maximum stop height **622,** the pop-in mechanical fastener is held firmly in place by first angled stop **523** with substantially no (e.g., no) vertical movement of the fastener.

Referring to **FIG. 6b****,** part **590b** has a thickness, **Tb,** falling between second intermediate stop height **624,** corresponding to the maximum distance between base **540** and second angled stop **525,** and minimum stop height **625,** corresponding to the minimum distance between base **540** and second angled stop **525** (which in this embodiment corresponds to the point where the second angled stop intersects the terminal stem). As the pop-in mechanical fastener is pressed into locking hole **595,** first surface **596b** passes beyond shoulder **522** and locking tab **515** begins springing into place.

First, the motion of the tab may be guided by its contact with the first angled stop. Unlike the prior art locking tab which included a step between the first angled surface and the second angled surface, little or no additional insertion force is required at the transition between first angled stop **523** and second angled stop **525.** Absent such a step between the first angled stop **523** and second angled stop **525,** first intermediate stop height **623** (which corresponds to the minimum distance between the base and the first angled stop) is equal to second intermediate stop height **624** (which corresponds to the maximum distance between the base and the first angled stop). In some embodiments, e.g., due to variations in manufacturing precision, a slight step may exist between the first angled stop and the second angled stop. In such embodiments, the first intermediate stop height will exceed the second intermediate stop height by an amount equal to the height of the step between them.

When the second surface **597b** contacts base **540,** locking tab **515** finishes springing into place until first surface **596b** engages second angled stop **525,** holding part **590b** in place.

The range of part thicknesses suitable for use with a particular pop-in mechanical fastener depends in part on the design of the locking surface. Specifically, the range of part thicknesses is generally equal to the difference between maximum stop height **622** and minimum stop height **625.** Generally, the actual maximum part thickness and the minimum part thickness will be affected by the gap between the terminal stem and the base as well as the height of the terminal stem; however, the range of part heights (i.e., the difference between the maximum stop height and the minimum stop height) will not be affected by these parameters.

Thus, without changing the design of the locking surface and without affecting the range of part heights that can be accommodated, pop-in mechanical fasteners according to the present disclosure can be easily modified to accommodate different minimum and maximum part heights by adjusting the gap between the terminal stem and the base and/or the length of the terminal stem. For example, a pop-in mechanical fastener could be designed to have a locking surface providing a difference between the maximum stop height and the minimum stop height of 1.2 mm. By selecting the sum of the gap and the length of the tenninal stem to be 1 mm, such a fastener would accommodate parts ranging in thickness from about 1 mm to about 2.2 mm. By simply selecting the sum of the gap and the length of the terminal stem to be 3 mm, the same fastener design would accommodate parts ranging in thickness from about 3 mm to about 4.2 mm.

Referring to **FIG. 2a****,** the use of spring tabs **150** may expand the useful range of part thicknesses for a particular locking surface design. Generally, spring tabs **150** are pivotally connected to the top surface of base **140.** Prior to insertion, the spring tabs are angled up away from the surface of the base; however, there is a space below the spring tabs allowing the spring tabs to be deflected into the base such that they are flush with the top surface of the base.

Referring to **FIG. 6b****,** when the part thickness exceeds minimum stop height **625,** the top of part **590b** will engage locking surface **527** when the bottom surface of the part pressed against base **540.** However, if the part thickness were less than the minimum stop height, the top of the part would be located somewhere below the locking surface, allowing some undesirable vertical motion. By including spring tabs **150,** thinner parts will rest on the tops of the spring tabs, which are elevated above the top surface of the base. Thus these thinner parts will contact the locking surface and eliminate vertical motion. Because the spring tabs can flex into the base and become flush with the base, the presence of the spring tabs does not alter the upper limit of the part thickness that can be used. In addition, when the spring tabs are flexed to accommodate thicker parts, the resistance to bending of the spring tabs may provide some upward force pressing the part against the locking surface, further minimizing any vertical movement.

Although the dual-angle tabs described above are adequate in many situations, it may be desirable to include more than two angled stops, e.g., three or even four or more angled stops. Taken to the extreme, the locking surface could include a curved stop having an infinite number of angled stops. Such embodiments are exemplified in **FIGS**. **7** and **8****,** as follows.

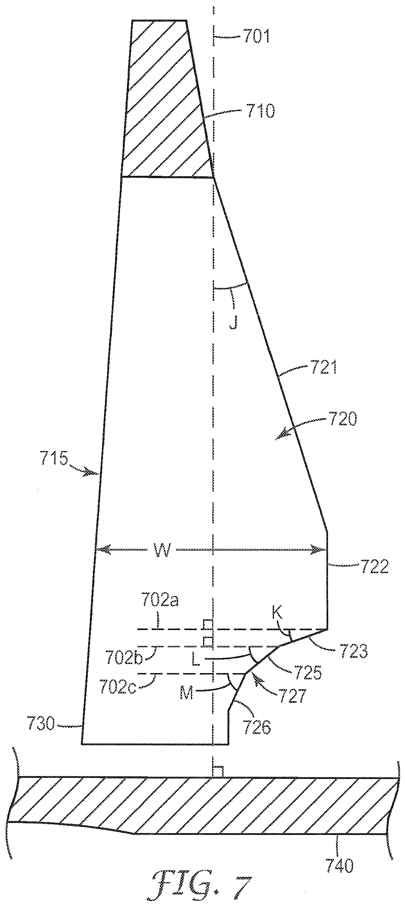

A cross-section of locking tab **715** according to some embodiments of the present disclosure is shown in **FIG. 7****.** Locking tab **715** includes wing **720** extending from insertion rim **710** to terminal stem **730,** which is adjacent base **740** of a pop-in mechanical fastener. Wing **720** includes insertion surface **721,** shoulder **722,** and locking surface **727.** Locking surface **727** consists of first angled stop **723,** second angled stop **725,** and third angled stop **726.**

Insertion surface **721** forms an angle, **J,** relative to insertion axis **701.** The greater the angle **J,** the greater the insertion force required when pressing the pop-in mechanical fastener into place.

First angled stop **723** forms an angle, **K,** relative to wing axis **702a,** which is perpendicular to insertion axis **701.** Similarly, second angled stop **725** forms an angle, **L,** relative to wing axis **702b,** third angled stop **726** forms an angle, **M,** relative to wing axis **702c.** The shallower the angles **K, L,** and **M,** the greater the extraction force required when removing the pop-in mechanical fastener. However, as the angles decrease, the width, **W,** of wing **720** must increase to provide the same range of height for each of the respective angled stops. Furthermore, as the width of wing **720** increases, the greater the required angle **J** for a fixed height fastener, leading to an undesirable increase in insertion force, as described above.

In some embodiments, angle **L** is greater than angle **K,** providing a steeper slope for second angled stop **725.** In some embodiments, angle **M** is greater than angle **L,** providing a steeper slope for third angled stop **726.** In some embodiments, regardless of the number of angled stops, the angle of the stops increases as the stops progress from the shoulder to the terminal stem of the tab. Referring to **FIG**. **7****,** this would result in angle **L** being greater than angle **K,** and angle **M** being greater than angle **L.** Generally, the present inventors have discovered that for the thinner parts that will engage the steeper angled stop, a steeper angle provides an adequately high removal force. In some embodiments, shallower angles may be required to maintain an acceptable removal force for the thicker parts that would be held in place by the progressively shallower angled stops. Thus, by providing a progression of angled stops, a greater range of part thickness may be accommodated without requiring an undesirable increase in width, **W,** of wing **720,** and the corresponding undesirable increase in insertion force resulting from an increase in angle **J.**

This discovery can be extended to a pop-in mechanical fastener having a curved locking surface as illustrated in **FIG**. 8, which shows a locking tab in accordance with the invention. Generally, the tangent to any point along the curve defines an angled stop; thus, the curved surface could be considered as having an infinite number of angled stops. Although **FIG**. **8** illustrates a locking surface consisting of a single curve, locking surfaces combining linear and curved stops, as well as compound curved locking surfaces may be used.

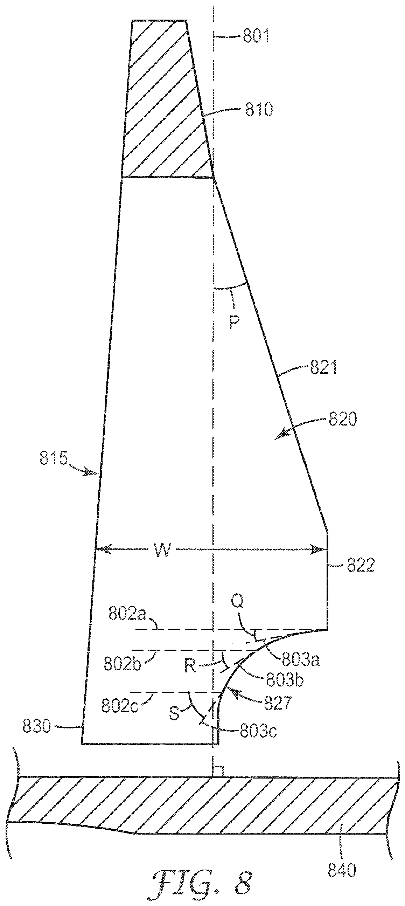

Referring to **FIG. 8****,** locking tab **815** includes wing **820** extending from insertion rim **810** to terminal stem **830,** which is adjacent base **840** of a pop-in mechanical fastener. Wing **820** includes insertion surface **821,** shoulder **822,** and curved locking surface **827.**

Insertion surface **821** forms an angle, **P,** relative to insertion axis **801.** The greater the angle **P,** the greater the insertion force required when pressing the pop-in mechanical fastener into place.

Line **803a** is tangent to locking surface **827** near shoulder **822,** and forms an angle, **Q,** relative to wing axis **802a,** which is perpendicular to insertion axis **801.** Similarly, line **803c** is tangent to locking surface **827** near terminal stem **830,** and forms an angle, **S,** relative to wing axis **802c.** An infinite number of tangent lines could be drawn between lines **803a** and **803c,** each forming an angle relative to a wing axis perpendicular to insertion axis **801.** For example, line **803b** is tangent to locking surface **827** at an arbitrary location between lines **803a** and **803c,** and forms an angle, **R,** relative to wing axis **802b.** In accordance with the invention, locking surface **827** is concave, i.e., the angle of a line tangent to locking surface **827** increases along the path of locking surface **827** from shoulder **822** to terminal stem **830.**

The pop-in mechanical fasteners may be made according to any known means including, e.g., injection molding. The injection mold may be produced using standard processes to form the desired part design. Generally, the pop-in mechanical fasteners may be formed (e.g., injection molded) from any suitable material including, e.g., thermoplastic, elastomers, thermoplastic elastomers, curable resins (e.g., thermosetting, moisture curable, and radiation curable resins), and the like. In some embodiments, materials (e.g., thermoplastic polymers) that exhibit good elastic recovery properties and tensile strength may be used. In some embodiments, polymers that are relatively insensitive to humidity and have suitable tensile properties up to 120 degrees C (° C) (250 degrees F) may be used. Examples of suitable thermoplastic resins which may be used include polypropylene, semicrystalline polymer resins such as polyolefins and polyolefin copolymers (e.g., based upon monomers having between 2 and 8 carbon atoms such as polyethylene, polypropylene, ethylene-propylene copolymers, etc.), polyesters, co-polyesters, nylon, polyamides, co-polyamides, fluorinated homopolymers and copolymers, polyalkylene oxides (e.g., polyethylene oxide and polypropylene oxide), ionomers (e.g., ethylene-methacrylic acid copolymers neutralized with base or salt), cellulose acetate, polyacrylonitrile, polyvinyl chloride, thermoplastic polyurethanes, epoxies (e.g., aromatic epoxies), polycarbonate, amorphous polyesters, amorphous polyamides, ABS copolymers, and polyphenylene oxide alloys. In some embodiments, polypropylene may be preferred.

Generally, once the pop-in mechanical fastener has been formed, it may be attached to any part having a suitable opening for insertion of the pin. The major surface of the base opposite the pin (i.e., the exposed major surface of the base) is then available for any desired use including, e.g., attachment of another part via an adhesive.

In some embodiments, one half of a mating mechanical fastener may be attached to the exposed major surface of the base. Suitable methods for attaching the mechanical fastener include adhesives (e.g., pressure sensitive adhesives), ultrasonic bonding, insert molding, and extrusion of a molten polymer layer that bonds the fastener to the based. Generally, it is preferred that the bond of the mating mechanical fastener to the base is stronger than the pop-in mechanical fastener disengagement strength (i.e., the force required to remove (or destroy during attempted removal of) the pop-in mechanical fastener.

In some embodiments, it may be useful to combine two pop-in mechanical fasteners of the same or different designs. For example, when bonding two parts together, it may be useful to design a first pop-in mechanical fastener useful over the range of thicknesses typical of the first part. A second pop-in mechanical fastener could them be designed to for use over the typical range of thicknesses for the second part. The bases of these two pop-in mechanical fasteners could be bonded to each other, either directly or indirectly (e.g., through the use of adhesives). In use, the stem of the first pop-in mechanical fastener would be inserted into the appropriate hole in the first part, leaving the stem of the second pop-in mechanical fastener exposed. Then, an appropriate hole in the second part could be aligned with the second stem and the second part pressed into place being held by the second pop-in mechanical fastener. By the appropriate selection of base thicknesses, desired degrees of set-off between the parts could be achieved. Also, through appropriate design of both pop-in mechanical fasteners, parts over a range of thickness can be held firmly in place with minimal or no vertical motion.

Generally, the mechanical fasteners of the present disclosure can be produced continuously or individually. In some embodiments, the pop-in mechanical fasteners are aligned and fed into a laminator which laminates a continuous strip of one half of a mating mechanical fastener to the exposed major surface of base. The individual pop-in mechanical fasteners can then be separated into individual pop-in mechanical fasteners having one half of a mating mechanical fastener attached to them.

Generally, the dimensions of the various parts of pop-in mechanical fasteners according to the present disclosure will depend on a number of factors including: the range in thickness of the parts the pop-in mechanical fastener can accommodate and the tolerable dimensions for the holes in the part required to permit insertion of the pins.

Although not limited to the following dimensions, design criteria for a particular application are described to guide one of ordinary skill in the art in selecting dimensions. In the automotive industry, the majority of part (e.g., panel) thicknesses varies between 0.70 mm to 1.20 mm. Therefore, it may be advantageous for one pop-in mechanical fastener design to be able to accommodate the entire range of panel thicknesses, yet not exhibit either vertical or sideways movement typical of current designs. Movement of the mechanical fastener can cause rattle and noise which are unacceptable in, e.g., the automotive industry.

Typically, the dimensions of the base are not critical, and can be selected based on well-understood criteria such as surface area required for bonding, mechanical strength, and cost. Generally, the pin dimensions will be selected based on additional criteria, as many of the dimensions are interrelated and selection of one dimension (e.g., the width of the pin) can limit the selection of other dimensions (e.g., the insertion angle).

"Total Pin Height" is defined as the distance from the top surface of the base to the top edge of the pin. Generally, it is desirable to minimize this dimension due to both cost and space considerations. For example, the pin will extend through the hole so there must be adequate space behind the panel to accommodate the pin. However, the minimum total pin height should accommodate the total range of panel thickness likely to be encountered. In some embodiments, the total pin height may be at least five times the maximum intended panel thickness, e.g., at least six times, or even seven times the maximum panel thickness. In some embodiments, the total pin height may be no greater than ten times, e.g., no greater than nine times, or even no greater than eight times the maximum intended panel thickness. For example, for the automotive application described above, a total pin height of 8 to 9 mm (e.g., 8.55 mm) may be used with a maximum intended panel thickness of 1.2 mm.

Generally, the walls of the pin enclose the open center of the pin and define the shape of the pin. The pin width is measured parallel to the tabs. The pin thickness is defined as the thickness of the walls of the pin. In some embodiments, the walls of the pin have a constant thickness along the height of the pin. In some embodiments, the pin wall is tapered near the insertion edge. Generally, a tight fit of the pin in the hole of the part is desired to prevent or minimize movement. However, it may be desirable to taper the insertion edge so that it is easier to initiate insertion of the pin in to the hole.

As discussed previously, the width of the tabs depends on at least one of the following factors, the pin height, the insertion angle, the heights of the angled stops, and the relative angles of the angled stops. In addition, the maximum pin width is affected by the available open space within the pin.

The pin width and the pin thickness control the width of the opening within the pin, which limits the size of the tabs. Specifically. as the pin is inserted into a hole in a part, the tab(s) are deflected into the open center of the pin. When the tabs encounter the opposite interior surface of the pin, they can no longer flex. Thus, the maximum tab width is affected by the open area within the pin parallel to the deflection of the tabs.

The insertion angle may be selected based on, e.g., the pin height, the desired width of the tabs, the available space for deflection within the pin, and the desired insertion force. In some embodiments, the insertion angle is no greater than 45 degrees, e.g., no greater than 30 degrees, or even no greater than 25 degrees. In some embodiments, the insertion angle is at least 13 degrees, e.g., at least 18 degrees. In some embodiments, the insertion angle is between 20 and 25 degrees, e.g., 23 degrees.

Generally, the angle of the first angled stop may be selected based on the insertion angle, the desired height of the first angled stop, and the available deflection space within the pin. In some embodiments, the first angle is at least 1 degree, e.g., at least 5 degrees, or even at least 15 degrees. In some embodiments, the first angle is no greater than 45 degrees, e.g., no greater than 40 degrees. In some embodiments the first angle is between 20 and 30 degrees, e.g., 27 degrees. Similarly, the angle of the second angled stop may be selected based on the insertion angle, the desired height of the second angled stop, and the available deflection space within the pin. The second angle is greater than the first angle, but is less than 90°. In some embodiments, the second angle is greater than the first angle by at least 5 degrees, e.g., at least 10 degrees, or even by at least 20 degrees. In some embodiments, the second angle is at least 25 degrees, e.g., at least 35 degrees. In some embodiments, the second angle is no greater than 70 degrees, e.g., no greater than 65 degrees. In some embodiments, the second angle is between 27 and 65 degrees, e.g., between 40 and 50 degrees, e.g., 47 degrees.

The height of the first angled stop is typically selected based on the total pin height, the available deflection space within the pin, the angle of the first angled stop and the angle of the second angled stop, and the desired range of part thicknesses. Similarly, the height of the second angled stop is typically selected based on the total pin height, the available deflection space within the pin, the angle of the first angled stop and the angle of the second angled stop, and the desired range of part thicknesses.

For the automotive example set forth previously, the height of the first angled stop may be between 0.25 and 0.35 mm, e.g., 0.31 mm. The height of the second angled stop may be between 0.75 and 0.9 mm, e.g., between 0.8 and 0.85 mm. e.g., 0.82 mm.

Generally, the total height of the angled stops (i.e., the sum of the heights of the first angled stop and the second angled stop) should be greater than the maximum expected part thickness, and sufficient to accommodate the desired range of part thickness. For the automotive example wherein the expected panel thicknesses range from 0.70 to 1.20 mm, the total height of the angled stops should span 0.50 mm. For example, a total height of 1.13 mm has been shown to cover a range of part thickness of 0.65 to 1.30 mm, or a total range of 0.65 mm.

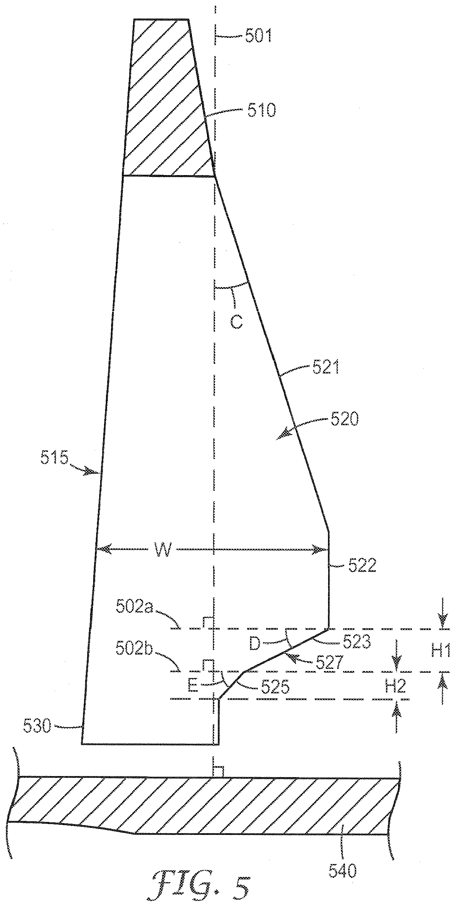

Examples: A pop-in mechanical fastener was designed according to the dimensions set forth in Table 1. The fastener included three tabs with substantially identical dimensions. Two tabs were positioned on one side of the pin and the third tab was position on the opposite side of the pin. This exemplary pop-in mechanical fastener is depicted in **FIG. 2a** and the tabs are illustrated in **FIG. 5****.**

**Table 1: Pop-in mechanical fastener dimensions.**

| | Dimension | |
|---|---|---|
| **Part description** | **(mm)** | **(inch)** |
| Base thickness (nominal*) | 2.00 | 0.079 |
| Pin height | 8.55 | 0.337 |
| Pin width at the top of the insertion edge | 4.22 | 0.166 |
| Pin width at the end of the insertion edge (i.e., at the pivot point of the tab) | 5.00 | 0.197 |
| Insertion angle - 23 degrees | -- | -- |
| Wing width | 3.23 | 0.127 |
| Shoulder height | 0.41 | 0.016 |
| First angled stop | | |
| Height | 0.82 | 0.032 |
| Width | 1.61 | 0.063 |
| Angle - 27 degrees | - - | - - |
| Second angled stop | | |
| Height | 0.31 | 0.012 |
| Width | 0.29 | 0.012 |
| Angle - 47 degrees | - - | - - |
| Terminal stem height | 0.54 | 0.021 |
| Gap between the top of the base and the lower edge of the terminal stem | 0.04 | 0.002 |

| | | |
|---|---|---|
| * The base tapers from 2 mm thick below the pin to 1.77 mm at the edges. | | |

Polypropylene resin (PROF-FAX 6523 polypropylene resin obtained from Himont U.S.A., Inc., Wilmington, Delaware) was pigmented with 2 parts of black color concentrate (CBK 00010 Black obtained from Clariant Corp., Charlotte, North Carolinal per 100 parts of the polypropylene resin. The pigmented resin was injection molded per the desired dimensions. Referring to **FIG. 2a****,** grooves **141** in the top surface of base **140** were provided to allow material to flow during the injection molding process used to create the pop-in mechanical fastener. Such grooves may be desirable when forming the locking tabs for pop-in mechanical fasteners designed for very thin part thicknesses (e.g., less than 1 mm). Other formation methods or fastener designs may not require such grooves.

One half of a mating mechanical fastener (3M™ Dual Lock™) was attached to the exposed base of the pop-in mechanical fastener as follows. The exposed surface of the base of the pop-in mechanical fastener was primed with 4298UV Promoter (available from 3M Company, St. Paul, Minnesota) and a 25.4 mm by 26 mm piece of Clear Dual Lock™ SJ3560 (available from 3M Company) was bonded to the primed surface of the base. Care was taken to insure adequate/maximum adhesive contact and minimize any air entrapment. The sample was allowed to dwell for about 16 hours at room temperature before testing.

Three oval shaped holes were milled into various thickness metal panels. Each hole had a major axis (i.e., a hole length) of 21.5 mm. The minor axis of the holes (i.e., the hole width) was 5.25 mm, 5.75 mm, and 6.25 mm. Generally, thinner panels require narrower width holes to minimize or prevent both vertical and sideways movement. Thicker panels require a wider hole for the tabs to open up. For thicker panels, both vertical and sideways movement are eliminated or minimized by the tabs opening up and catching on the panel.

Generally, with the design of the Example, the minimum panel thickness for this was 0.65 mm for a 5.25 mm hole width. This resulted in minimal vertical and sideways movement. As the panel thickness increased to over about 1.0 mm, the hole width needed to be increased from 5.25 mm to 5.75 mm in order for the tabs to clear the hole and snap open upon insertion. The maximum panel thickness was 1.35mm with a 6.25 mm hole width. At this thickness, the panel needed to be moved sideways for the tabs to pop open. Extraction performance was expected to be reduced as only a small amount/area of the tab would catch on the perimeter of the hole.

Insertion and extraction force measurements were conducted using the pop-in mechanical fasteners of the Example, according to the following test procedures.

Insertion Force Test Method One half a mating mechanical fastener was adhered to the exposed surface of the base of a pop-in mechanical fastener as described in the Example. The second half of the mating mechanical fastener was removably attached to the first half to assist in maintaining the desired orientation of the pop-in mechanical fastener relative to the hole during the insertion force test.

With the pin of the pop-in mechanical fastener aligned perpendicular to the hole of the test panel, the pop-in mechanical fastener was inserted using a Chatillon tensile tester (Model UTSM, available from John Chatillon & Sons, New York). The pop-in mechanical fastener was inserted at a rate of about 3.8 cm/minute (1.5 inches/minute) and the peak insertion force was measured using a Chatillon Digital Force Gauge (Model Number DFGS100) set in its "peak compression mode".

Fit Test Once the pop-in mechanical fastener was fully inserted in the hole, the relative fit was assessed qualitatively. Both vertical movement (i.e., movement perpendicular to the part) and horizontal movement (i.e., movement parallel to the width of the pin) were assessed. Note that movement parallel to the length of the pin would depend on the dimensions of the hole relative to the length dimension of the pin, and was not evaluated.

Extraction Force Test Method A hot melt adhesive has applied to a second half of a complimentary mating mechanical fastener (SJ3221 available from 3M). This complimentary half was mechanically engaged with the first half of the mating mechanical fastener bonded to the base of the pop-in mechanical fastener. The adhesive firmly held the parts together such that they would not disengage during the extraction test.

The pop-in mechanical fastener was then extracted with the pin aligned with the hole in the metal test panel at a rate of about 30 cm/min. (12 inches/minute) using the Chatillon Tensile Tester and the Chatillon Digital Force Gauge set in its "peak tension mode." The maximum extraction force was measured and the test termination mode was recorded. If peak extraction force occurred when the pop-in mechanical fastener was removed from the hole, the test termination mode was recorded as "Removal." If the peak extraction force occurred without removing the pop-in mechanical fastener (e.g., an adhesive failed), the termination mode was recorded as "Destruction." Regardless of the termination mode, all samples exhibited an extraction force of at least 311 N (70 lbf) and most samples were destroyed rather than being removed at extraction forces exceeding 380 N (85 lbf).

The results of these tests are summarized in Table 2. The reported values are the average of two replicates.

**Table 2: Test Results**

| Part thickness | Hole width | Insertion force | Movement | Extraction force | Termination mode |
|---|---|---|---|---|---|
| 0.71 mm | 5.25 mm | 46 N (10.3 lbf) | minimal | 372 N (83.7 lbf) | Destruction |
| 0.71 mm | 5.75 mm | 37 N (8.3 lbf)) | minimal | 380 N (85.1 lbf) | Destruction |
| 0.78 mm | 5.25 mm | 31 N (7.0 lbf) | none | 398 N (89.5 lbf) | Destruction |
| 0.87 mm | 5.25 mm | 57 N (12.8 lbf) | none | 393 N (88.3 lbf) | Destruction |
| 0.98 mm | 5.25 mm | 36 N (8.2 lbf) | none | 388 N (87.2 lbf) | Destruction |
| 1.18 mm | 5.75 mm | 46 N (10.3 lbf) | minimal | 316 N (71.1 lbf) | Destruction/ Removal |
| 1.18 mm | 6.25 mm | 43 N (9.7 lbf) | none | 334 N (75.1 lbf) | Removal |

Various modifications and alterations of this invention will become apparent to those skilled in the art without departing from the scope of this invention.

## Claims

1. A pop-in mechanical fastener comprising a base (840) connected to a pin comprising an insertion rim (810) and at least one locking tab (815) pivotally connected to the insertion rim (810), wherein the locking tab (815) comprises a wing (820) comprising an insertion surface (821) and a locking surface (827);
the pop-in mechanical fastener being **characterized in that**
the locking surface (827) comprises an arcuate stop that is concave relative to the base (840),
wherein spring tabs (150) are pivotably connected to a top surface of the base, the spring tabs angled up away from the surface of the base, wherein the base has a space below the spring tabs allowing the spring tabs to be deflected into the base such that the fully deflected spring tabs are flush with the top surface of the base.

2. The pop-in mechanical fastener of claim 1, wherein the wing (820) further comprises a shoulder (822) connecting the insertion surface (821) to the locking surface (827), and a terminal pin (830) extending from the locking surface (827) toward the base (840).

3. The pop-in mechanical fastener of claim 1 or 2, wherein the locking surface (827) further comprises as least one angled stop forming an angle relative to a wing axis (802a, 802b, 802c), wherein the wing axis is perpendicular to an insertion axis (801) that is perpendicular to the base (840).

## Patentansprüche

1. Mechanisches Rastbefestigungselement, umfassend eine Basis (840), die mit einem Stift verbunden ist, der einen Einführrand (810) und mindestens eine Verriegelungsnase (815), die drehbar mit dem Einführrand (810) verbunden ist, umfasst, wobei die Verriegelungsnase (815) einen Flügel (820) umfasst, der eine Einführfläche (821) und eine Verriegelungsfläche (827) umfasst;
wobei das mechanische Rastbefestigungselement **dadurch gekennzeichnet ist, dass**
die Verriegelungsfläche (827) einen bogenförmigen Anschlag umfasst, der relativ zu der Basis (840) konkav ist,
wobei Federzungen (150) drehbar mit einer oberen Oberfläche der Basis verbunden sind, wobei die Federzungen von der Oberfläche der Basis weg nach oben abgewinkelt sind, wobei die Basis einen Raum unterhalb der Federzungen aufweist, der ermöglicht, dass die Federzungen derart in die Basis hinein abgelenkt werden, dass die vollständig abgelenkten Federzungen mit der oberen Oberfläche der Basis auf gleicher Höhe liegen.

2. Mechanisches Rastbefestigungselement nach Anspruch 1, wobei der Flügel (820) ferner eine Schulter (822) umfasst, welche die Einführfläche (821) mit der Verriegelungsfläche (827) verbindet, und einen Endstift (830), der sich von der Verriegelungsfläche (827) zu der Basis (840) hin erstreckt.

3. Mechanisches Rastbefestigungselement nach Anspruch 1 oder 2, wobei die Verriegelungsfläche (827) ferner mindestens einen Winkelanschlag umfasst, der einen Winkel relativ zu einer Flügelachse (802a, 802b, 802c) bildet, wobei die Flügelachse lotrecht zu einer Einführachse (801) ist, die lotrecht zu der Basis (840) ist.

## Revendications

1. Fermoir mécanique à insertion comprenant une base (840) reliée à une broche comprenant un bord d'insertion (810) et au moins une languette de verrouillage (815) montée de façon pivotante sur le bord d'insertion (810), dans lequel la languette de verrouillage (815) comprend une aile (820) comprenant une surface d'insertion (821) et une surface de verrouillage (827) ;
le fermoir mécanique à insertion étant **caractérisé en ce que**
la surface de verrouillage (827) comprend une butée arquée qui est concave par rapport à la base (840),
dans lequel des languettes élastiques (150) sont montées de façon pivotante sur une surface supérieure de la base, les languettes élastiques formant un angle vers le haut à partir de la surface de la base, dans lequel la base présente un espace au-dessous des languettes élastiques qui permet aux languettes élastiques d'être déviées dans la base de telle sorte que les languettes élastiques entièrement déviées affleurent la surface supérieure de la base.

2. Fermoir mécanique à insertion selon la revendication 1, dans lequel l'aile (820) comprend en outre un épaulement (822) reliant la surface d'insertion (821) à la surface de verrouillage (827), et une broche terminale (830) s'étendant de la surface de verrouillage (827) vers la base (840).

3. Fermoir mécanique à insertion selon la revendication 1 ou 2, dans lequel la surface de verrouillage (827) comprend en outre au moins une butée angulaire formant un angle par rapport à un axe (802a, 802b, 802c) de l'aile, dans lequel l'axe de l'aile est perpendiculaire à un axe d'insertion (801) qui est perpendiculaire à la base (840).
